# EUROPÄISCHE PATENTANMELDUNG

(11) **EP 1 065 817 A2**
(43) Veröffentlichungstag der Anmeldung: **03.01.2001**
(21) Anmeldenummer: 00440147.7
(22) Anmeldetag: 19.05.2000
(51) Int. Cl.: H04J 3/06

(54) **Verfharen zum Generieren eines Taktes für den Rückkanal eines bidirektionalen Punkt-zu-Mehrpunkt Netzwerkes**

(30) Priorität: 26.06.1999 DE 19929337
(71) Anmelder: ALCATEL, 75008 Paris (FR)
(72) Erfinder: Enssle, Jürgen, Dr., 70734 Fellbach (DE); Otterbach, Jürgen, 70499 Stuttgart (DE)
(74) Vertreter: Menzietti, Domenico, Dipl.-Ing

(57) **Zusammenfassung**

Ein in der Zentrale (1) eines bidirektionalen Punkt-zu-Mehrpunkt Netzwerkes generierter zentraler Takt wird über den Vorwärtskanal des Netzwerkes in Form von Timestamps in einem MPEG-2 Datenformat zu mehreren Sende-/Empfangseinrichtungen (3) übertragen. Jede Sende/Empfangseinrichtung (3) generiert den Takt für den Rückkanal aus dem zentralen Takt und einem in einem Referenztaktgenerator (12) generierten lokalen Takt. Die Zentrale (1) vergleicht jeden empfangenen Takt einer Sende-/Empfangseinrichtung (3) mit dem zentralen Takt und leitet aus diesem Vergleich eine für jede Sende-/Empfangseinrichtung (3) individuelle, digitale Phasenkorrekturinformation ab, die sie der entsprechenden Sende-/Empfangseinrichtung (3) im MPEG-2 Datenstrom überträgt. Die entsprechende Sende-/Empfangseinrichtung (3) regelt den Takt für den Rückkanal mittels der individuellen Phasenkorrekturinformation in einem numerisch gesteuerten Oszillator (13), dessen Ausgangsfrequenz unterschiedlich zum zentralen Takt individuell einstellbar ist.

## Beschreibung

Die Erfindung bezieht sich auf ein Modul zur Generierung eines Taktes für den Rückkanal eines bidirektionalen Punkt-zu-Mehrpunkt Netzwerkes, eine Zentrale des Netzwerkes sowie ein Verfahren zum Generieren des Taktes für den Rückkanal des bidirektionalen Punkt-zu-Mehrpunkt Netzwerkes.

Als Punkt-zu-Mehrpunkt Netzwerke sind im Bereich der leitungsgebundenen Netzwerke beispielsweise sog. hybride Glasfaser/Koaxialkabelnetze bekannt. Im Bereich drahtloser Netzwerke sind beispielsweise Funknetze, insbesondere aus Zellen aufgebaute stationäre oder Mobilfunk-Netze bekannt. Im Bereich gemischter Netzwerke sind beispielsweise hybride Glasfaser/Funknetze bekannt.

In Punkt-zu-Mehrpunkt Netzwerken werden Informationen über einen Vorwärtskanal von einer Zentrale zu einer Vielzahl von Sende-/Empfangeinrichtungen übertragen. Als Sende-/Empfangseinrichtungen dienen beispielsweise Decoder, Set Top Boxen, Mobilfunkgeräte. Die Informationen beinhalten beispielsweise Fernsehsignale, Videosignale, Internetsignale, Telefonsignale. Über einen Rückkanal werden Informationen von den Sende-/Empgangseinrichtungen zur Zentrale übertragen. Die im Rückkanal übertragenen Informationen beinhalten z.B. Abrufsignale für Videos, Internetzugangsignale, Telefonsignale.

Der Zugriff der Sende-/Empfangseinrichtungen auf den Rückkanal muß geregelt werden. Es sind einige Zugriffsverfahren bekannt, darunter TDMA, FDMA, CDMA; TDMA = Time Division Multiple Access, FDMA = Frequency Division Multiple Access, CDMA = Code Division Multiple Access. Als besondere Ausführungsform des CDMA ist das S-CDMA = Synchronous CDMA bekannt.

Beim CDMA wird jeder Sende-/Empfangseinrichtung ein individueller Code zugewiesen. Die Übertragung der Daten aller Sende-/Empfangseinrichtungen findet im gleichen Frequenzbereich unter Verwendung von Spreizcodemodulation (Spread Spectrum Modulation) statt. Beim S-CDMA muß zusätzlich die Aussendung der Codes derart koordiniert werden, daß die in der Zentrale eintreffenden Codes synchron sind.

Die Erfindung schafft ein Modul gemäß Patentanspruch 1, eine Zentrale gemäß Patentanspruch 3 und ein Verfahren gemäß Patentanspruch 4 zum Generieren eines Taktes für den Rückkanal eines bidirektionalen Punkt-zu-Mehrpunkt Netzwerkes.

Vorteilhafte Ausgestaltungen sind den abhängigen Ansprüchen zu entnehmen.

Die Erfindung wird im folgenden anhand eines Ausführungsbeispiels unter Zuhilfenahme einer Figur erläutert.

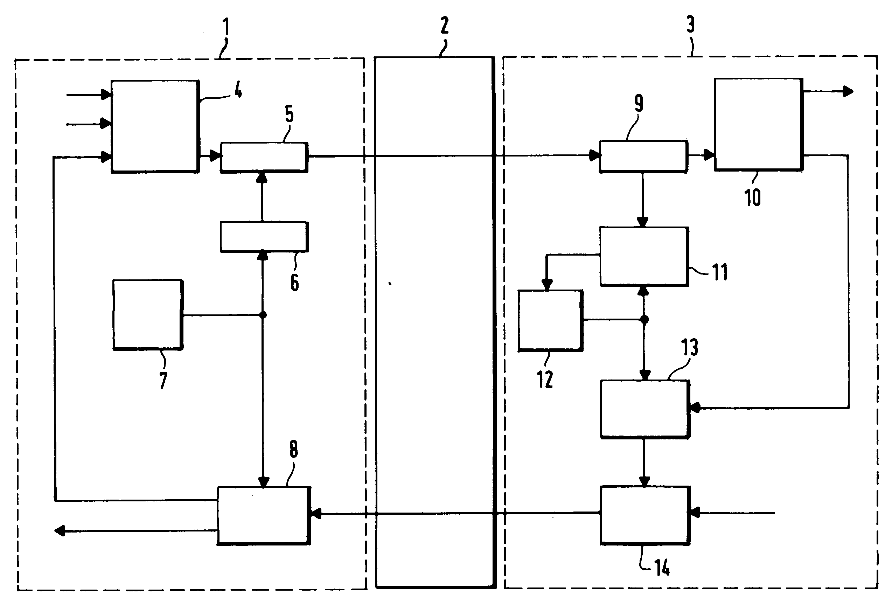

Die Figur zeigt ein Punkt-zu-Mehrpunkt Netzwerk beinhaltend eine Zentrale 1, die über ein Netzwerk mit einer Vielzahl von Sende-/Empfangseinrichtungen verbunden ist, von denen aus Gründen der Übersichtlichkeit eine 3 dargestellt ist.

Zum Verbinden der Zentrale 1 mit den Sende-/Empfangseinrichtungen 3 ist ein Netzwerk 2 mit einem Vorwärts- und einen Rückkanal vorgesehen, wobei für den Rückkanal insbesondere ein S-CDMA Zugriffsverfahren vorgesehen ist. Das Netzwerk 2 ist beispielsweise als passives optisches Netz aus Glasfaserleitungen und optischen Splittern, als Funknetz oder als hybrides Netz aus Glasfasern und Koaxialkabeln oder Glasfasern und Funk ausgeführt.

Zunächst wird ein Verfahren zum Generieren eines Taktes für den Rückkanal des bidirektionalen Punkt-zu-Mehrpunkt Netzwerkes, der auch als "symbol clock" oder "chip clock" bezeichnet wird, beschrieben. Die Frequenz eines in der Zentrale 1 generierten zentralen Taktes wird digital kodiert. Die digitale Information wird über das Netzwerk 2 zu den Sende-/Empfangseinrichtungen 3 übertragen. Jede Sende-/Empfangseinrichtungen 3 generiert die Taktfrequenz für den Rückkanal aus der digital kodierten Frequenzinformation des zentralen Taktes und einem lokalen Takt. Die Zentrale 1 vergleicht jeden empfangenen Takt einer Sende-/Empfangseinrichtung 3 mit dem zentralen Takt und leitet aus diesem Vergleich eine für jede Sende-/Empfangseinrichtung 3 individuelle, digitale Phasenkorrekturinformation ab, die sie der entsprechenden Sende-/Empfangseinrichtung 3 überträgt. Die entsprechende Sende-/Empfangseinrichtung 3 regelt die Taktphase für den Rückkanal mittels der individuellen Phasenkorrekturinformation.

Die Zentrale 1 des bidirektionalen Punkt-zu-Mehrpunkt Netzwerkes beinhaltet dazu eine Sendeeinheit 4, 5, 6 zur Übertragung von Informationen über das Netzwerk 2, einen Taktgenerator 7 zur Generierung des zentralen Taktes und eine über den zentralen Takt gesteuerte Empfangseinheit 8 zum Empfang von Informationen. Die Empfangseinheit 8 ist geeignet, neben der Selektion der Daten aus den empfangenen Informationen individuelle, digitale Phasenkorrekturinformationen für einzelne Sende-/Empfangseinrichtungen 3 abzuleiten, z.B. durch Vergleich der Phasen des empfangenen Taktes und des zentralen Taktes, und der Sendeeinheit 4, 5, 6 zuzuführen. Die Sendeeinheit 4, 5, 6 ist geeignet, die digital kodierte Frequenzinformation des zentralen Taktes und die individuellen Phasenkorrekturinformationen zusammen mit zu übertragenden Daten über das Netzwerk 2 zu übertragen.

Die Sendeeinheit 4, 5, 6 beinhaltet einen Multiplexer 4 zum Multiplexen der zu übertragenden Daten und der individuellen Phasenkorrekturinformationen und eine dem Multiplexer 4 nachgeschaltete Timestamp Insertion Einheit 5, die geeignet ist, in einer Timestamp Generation Einheit 6 aus dem zentralen Takt generierte Timestamps (Frequenzinformation) in den gemultiplexten Datenstrom einzufügen. Die Timestamp Generation Einheit 6 beinhaltet beispielsweise einen durchlaufenden Zähler, der die Perioden der Taktfrequenz ständig zählt. Der Multiplexer 4 erzeugt in bestimmten Abständen Datenfelder mit einer speziellen Kennung. Die Timestamp Insertion Einheit 5 erkennt den Beginn eines solchen Feldes über einen Komparator oder erhält ein Steuersignal von Multiplexer 4 und überschreibt das Feld mit dem dann anliegenden aktuellen Zählerstand. Die Informationsübertragung der zu übertragenden Daten, der individuellen Phasenkorrekturinformationen und der zentralen Taktfrequenz erfolgen digital und vorzugsweise im MPEG-2 Datenformat; MPEG = Motion Picture Expert Group. MPEG-2 Datenformate werden beispielsweise in DVB und DAVIC Netzen verwendet; DVB = Digital Video Broadcasting, DAVIC = Digital Audio Visual Council.

Multiplexer 4 ist beispielsweise als MPEG-2 Multiplexer ausgeführt. Multiplexer 4 kann dann sog. packets in den Datenstrom einfügen. Die packets dienen zum Übertragen von Kontrollnachrichten, sog. control messages. Als Kontrollnachricht können Timestamps eingefügt werden. Die Verzögerung des Einfügens der Kontrollnachrichten ist allerdings nicht vorhersehbar. Für individuelle Signale, wie die Phasenkorrekturinformationen ist dies nicht hinderlich. Beim Einfügen von periodischen Signalen, wie z.B. Taktsignalen kann jedoch Jitter auftreten. Um den Jitter zu reduzieren wird der zentrale Takt erst in der dem Multiplexer 4 nachgeschalteten Timestamp Insertion Einheit 5 in den Datenstrom eingefügt. Die Timestamp Insertion Einheit 5 überwacht den Datenstrom und erkennt die Felder, die für die Übertragung von Kontrollnachrichten vorgesehen sind. Vorgegebene Felder werden dann mit den aktuellen Timestamps, die den zentralen Takt beinhalten, überschrieben. Eine Anpassung des zentralen Taktes an das Format der Timestamps erfolgt zuvor in der Timestamp Generation Einheit 6.

Zusätzlich zur Phasenkorrekturinformation kann eine individuelle, digitale Frequenzkorrekturinformation generiert und übertragen wird. In der Empfangseinheit 8 werden dazu beispielsweise die Frequenzen des empfangenen Taktes und des zentralen Taktes miteinander verglichen. Die individuelle Frequenzkorrekturinformation wird ebenfalls dem Multiplexer 4 zugeführt.

Die Sende-/Empfangseinrichtung 3 beinhaltet ein Modul zur Generierung eines Taktes für den Rückkanal des bidirektionalen Punkt-zu-Mehrpunkt Netzwerkes. Das Modul beinhaltet einen Referenztaktgenerator 12 zur Erzeugung eines Referenztaktes. Der Referenztaktgenerator 12 ist mit einer Referenztaktsteuerung 11 und einem numerisch gesteuerten Oszillator 13, ein sog. numeric controled oscillator, verbunden. Die Referenztaktsteuerung 11 ist geeignet, den Referenztakt mit dem über das Netzwerk empfangenen, zentralen Taktfrequenzinformation zu vergleichen und aus dem Ergebnis des Vergleichs ein Steuersignal zu Regelung des Referenztaktes auf die referenztaktfrequenz in der Zentrale 1 zu generieren. Der numerisch gesteuerte Oszillator 13 ist geeignet, den Takt für den Rückkanal aus dem Referenztakt und der individuellen, digitalen Phasenkorrekturinformation und ggf. der individuellen Frequenzkorrekturinformation zu generieren. Die Verwendung eines numerisch gesteuerten Oszillators 13 ist besonders vorteilhaft, da sowohl die Einstellung/Programmierung der Ausgangsfrequenz als auch der Phase auf einfache Art und Weise durchführbar ist. Die Einstellbarkeit der Ausgangsfrequenz auf einen Wert ungleich des zentralen Taktes hat den Vorteil, daß für einzelne Sende-/Empfangseinrichtungen 3 jeweils ein z.B. an die individuelle Datenrate angepaßter Takt verwendet werden kann. Dadurch wird eine flexible, aber stets synchrone Taktgenerierung ermöglicht. Dem numerisch gesteuerten Oszillator 13 kann ein Synthesizer vorgeschaltet werden, z.B. um die Referenztaktfrequenz des Referenztaktgenerators 12 um einen bestimmten Faktor, z.B. zehn zu erhöhen oder zu erniedrigen, damit dem numerisch gesteuerte Oszillator 13 eine für ihn optimale Taktfrequenz zugeführt wird.

Die Sende-/Empfangseinrichtung 3 beinhaltet ferner eine durch den Takt für den Rückkanal ansteuerbare Sendeeinheit 14 zur Übertragung von Informationen, insbesondere Daten, über den Rückkanal des Netzwerkes, und eine Empfangseinheit 9, 10 zum Empfang von Informationen. Die Empfangseinheit 9, 10 ist geeignet, aus den empfangenen Informationen die Frequenzinformation des zentralen Taktes und die individuellen Phasenkorrekturinformationen zu extrahieren und der Referenztaktsteuerung 11 bzw. dem numerisch gesteuerten Oszillator 13 zuzuführen. Die Empfangseinheit 9, 10 beinhaltet einen Demultiplexer 10 zur Selektion/zum Demultiplexen von Daten und individuellen Phasenkorrekturinformationen und eine dem Demultiplexer 10 vorgeschaltete Extraktioneinheit 9, die zur Extraktion der Frequenzinformation des zentralen Taktes dient. Die Extraktionseinheit 9 detektiert und extrahiert die im empfangenen Datenstrom an vorgegebenen Stellen plazierten Timestamps, die die Frequenzinformation des zentralen Taktes enthalten. Ein Komparator sucht im Datenstrom nach der Kennung für das Datenfeld. Die dann folgenden Daten werden an die Referenztaktsteuerung 11 weitergegeben. Die Referenztaktsteuerung 11 vergleicht bei jedem eintreffen eines neuen Datenpaketes einen eigenen ständig mitlaufenden Zähler und bildet die Differenz. Dieser Wert ist ein Maß für die Abweichung des lokalen Taktes von der Referenz in der Zentrale. Aus diesem Wert kann z.B. eine Steuerspannung für einen spannungsgesteuerten Oszillator gewonnen werden oder ein Datenwort für einen weiteren numerisch gesteuerten Oszillator, der dann einen freilaufenden Mastertakt ausreichender Stabilität erfordert.

Die Realisierung erfolgt beispielsweise mittels programmierbarer Logikbausteine.

## Patentansprüche

1. Modul zur Generierung eines Taktes für den Rückkanal eines bidirektionalen Punkt-zu-Mehrpunkt Netzwerkes, das eine Zentrale (1) und meherere Sende-/Empfangseinrichtungen (3) aufweist, wobei für den Rückkanal insbesondere ein S-CDMA Zugriffsverfahren vorgesehen ist,
**dadurch gekennzeichnet,**
daß ein Referenztaktgenerator (12) zur Erzeugung eines Referenztaktes vorgesehen ist, daß der Referenztaktgenerator (12) mit einer Referenztaktsteuerung (11) und einem numerisch gesteuerten Oszillator (13) verbunden ist, daß die Referenztaktsteuerung (11) geeignet ist, den Referenztakt mit einer über das Netzwerk empfangenen, digitalen Frequenzinformation über einen zentralen Takt zu vergleichen und aus dem Ergebnis des Vergleichs ein Steuersignal zu Regelung des Referenztaktes auf den zentralen Takt zu generieren, und daß der numerisch gesteuerte Oszillator (13) geeignet ist, den Takt für den Rückkanal aus dem Referenztakt und einer individuellen, digitalen Phasenkorrekturinformation zu generieren.

2. Sende-/Empfangseinrichtung (3) eines bidirektionalen Punkt-zu-Mehrpunkt Netzwerkes, dadurch gekennzeichnet, daß sie eine Sendeeinheit (14) zur Übertragung von Informationen über den Rückkanal des Netzwerkes, eine Empfangseinheit (9, 10) zum Empfang von Informationen und ein Modul gemäß Anspruch 1 beinhaltet, daß die Empfangseinheit (9, 10) geeignet ist, aus den empfangenen Informationen die Frequenzinformation des zentralen Taktes und die individuellen Phasenkorrekturinformationen zu extrahieren und der Referenztaktsteuerung (11) bzw. dem numerisch gesteuerten Oszillator (13) zuzuführen.

3. Zentrale (1) eines bidirektionalen Punkt-zu-Mehrpunkt Netzwerkes, das die Zentrale (1) und mehrere Sende-/Empfangseinrichtungen (3) aufweist, dadurch gekennzeichnet, daß die Zentrale (1) eine Sendeeinheit (4, 5, 6) zur Übertragung von Informationen über das Netzwerk, einen Taktgenerator (7) zur Generierung eines zentralen Taktes und eine über den zentralen Takt gesteuerte Empfangseinheit (8) zum Empfang von Informationen beinhaltet, daß die Empfangseinheit (8) geeignet ist, aus den empfangenen Informationen individuelle, digitale Phasenkorrekturinformationen für einzelne Sende-/Empfangseinrichtungen (3) abzuleiten und der Sendeeinheit (4, 5, 6) zuzuführen, und daß die Sendeeinheit (4, 5, 6) geeignet ist, den zentralen Takt in Form einer digital kodierten Frequenzinformation und die individuellen Phasenkorrekturinformationen zusammen mit zu übertragenden Daten über das Netzwerk zu übertragen.

4. Verfahren zum Generieren eines Taktes für den Rückkanal eines bidirektionalen Punkt-zu-Mehrpunkt Netzwerkes, das eine Zentrale (1) und meherere Sende-/Empfangseinrichtungen (3) aufweist, dadurch gekennzeichnet, daß ein in der Zentrale (1) generierter zentraler Takt in Form einer digital kodierten Frequenzinformation über das Netzwerk zu den Sende-/Empfangseinrichtungen (3) übertragen wird, daß die Sende-/Empfangseinrichtungen (3) den Takt für den Rückkanal aus der digital übertragenen Frequenzinformation und einem lokalen Takt generieren, daß die Zentrale (1) die Phase jedes empfangenen Taktes einer Sende-/Empfangseinrichtung (3) mit der Phase des zentralen Taktes vergleicht und aus diesem Vergleich eine für jede Sende-/Empfangseinrichtung (3) individuelle, digitale Phasenkorrekturinformation ableitet, die sie der entsprechenden Sende-/Empfangseinrichtung (3) überträgt, und daß die entsprechende Sende-/Empfangseinrichtung (3) die Taktphase für den Rückkanal mittels der individuellen Phasenkorrekturinformation einstellt.

5. Sende-/Empfangseinrichtung (3) nach Anspruch 2, dadurch gekennzeichnet, daß die Empfangseinheit (9, 10) einen Demultiplexer (10) zur Selektion von Daten und individuellen Phasenkorrekturinformationen und eine dem Demultiplexer (10) vorgeschaltete Extraktioneinheit (9) beinhaltet, die zur Extraktion der digitalen Frequenzinformation des zentralen Taktes dient.

6. Zentrale (1) nach Anspruch 3, dadurch gekennzeichnet, daß die Sendeeinheit (4, 5, 6) einen Multiplexer (4) zum Multiplexen der zu übertragenden Daten und der individuellen Phasenkorrekturinformationen und eine dem Multiplexer nachgeschaltete Timestamp Insertion Einheit (5) beinhaltet, die geeignet ist, in einer Timestamp Generation Einheit (6) aus dem zentralen Takt generierte digitale Frequenzinformation (Timestamps) in den gemultiplexten Datenstrom einzufügen.

7. Zentrale (1) nach Anspruch 3, dadurch gekennzeichnet, daß die Informationsübertragung im MPEG-2 Datenformat erfolgt.

8. Modul nach Anspruch 1 oder Zentrale (1) nach Anspruch 3, dadurch gekennzeichnet, daß das Netzwerk als hybrides Glasfaser/Koaxialkabelnetz oder als hybrides Glasfaser/Funknetz ausgeführt ist.

9. Zentrale (1) nach Anspruch 3 oder Verfahren nach Anspruch 4, dadurch gekennzeichnet, daß zusätzlich zur Phasenkorrekturinformation eine individuelle, digitale Frequenzkorrekturinformation generiert und übertragen wird.
